# EUROPEAN PATENT APPLICATION

(11) **EP 1 621 997 A1**
(43) Date of publication of application: **01.02.2006**
(21) Application number: 03723260.0
(22) Date of filing: 08.05.2003
(51) Int. Cl.: G06F 9/06

(54) **SOFTWARE CONFIGURATION RESTORATION METHOD AND DEVICE, AND COMPUTER-READABLE RECORDING MEDIUM**

(71) Applicant: FUJITSU LIMITED, Kawasaki-shi, Kanagawa 211-8588 (JP)
(72) Inventor: MARUYAMA, Akiko, FUJITSU LIMITED, Kawasaki-shi, Kanagawa 211-8588 (JP)
(74) Representative: HOFFMANN EITLE
(86) International application number: PCT/JP2003/005768
(87) International publication number: WO 2004/099972

(57) **Abstract**

A software structure restoration method stores software structure information for identifying a software and install information required to install the software in a memory region, when installing the software to an information processing apparatus, and reinstalls the software to the information processing apparatus based on the software structure information and the install information by accessing the memory region, when reinstalling an operating system to the information processing apparatus.

## Description

### TECHNICAL FIELD

The present invention generally relates to software structure restoring method and apparatus and computer-readable storage media, and more particularly to a software structure restoring method and apparatus for restoring a software environment to a customized software environment when reinstalling an operating system (OS) of an information processing apparatus, such as a personal computer, that has the software environment customized by a user, and to a computer-readable storage medium that stores a computer program for causing a computer to restore the software environment by such a software structure restoring method. The present invention also relates to the computer program itself that causes the computer to restore the software environment by the software structure restoring method described above.

### BACKGROUND ART

In information processing apparatuses such as personal computers, software such as various application programs are installed in addition to the operating system that controls the entire information processing apparatus. The software includes software that is preinstalled in the information processing apparatus, and software that is installed into the information processing apparatus by the user himself. The software that is installed into the information processing apparatus by the user himself may be read and downloaded from a recording medium such as a CD storing the software, and may be downloaded from another information processing apparatus via a network such as the Internet. In addition, there are cases where the preinstalled software has been uninstalled by the user.

Various kinds of troubles may be generated in the information processing apparatus. Examples of the troubles include a virus infection of the information processing apparatus, a software error, a failure of a recording medium drive such as a hard disk drive, and a damage to a recording medium itself such as a hard disk. When such a trouble is generated, it is desirable in some cases to reinstall the operating system which is installed in the information processing apparatus.

However, when the operating system is reinstalled, a software environment of the information processing apparatus is reset to an initial software environment. Accordingly, in a case where the user has customized the software environment by uninstalling a preinstalled software or installing a new software in addition to the preinstalled software, the user must return the software environment to the original customized software environment after the operating system is reinstalled, by carrying out operations identical to those carried out when originally customizing the software environment.

But in order to return the software environment to the original customized software environment, the user must know the preinstalled software that was uninstalled and the new software that was added when customizing the software environment. For example, in a case where the added software was downloaded via the Internet, it is necessary to record a provider (URL) of the software. For this reason, there was a problem in that it is impossible to return the software environment to the customized software environment after the operating system is reinstalled, unless the user keeps a record related to the customizing of the software environment.

On the other hand, even if the record related to the customizing of the software environment is kept, the user must return the software environment to the customized software environment after the operating system is reinstalled, by carrying out operations identical to those carried out when originally customizing the software environment, in accordance with the record related to the customizing of the software environment. As a result, there was a problem in that the load on the user is large because it takes time and requires troublesome operations to restore the customized software environment.

The applicant is aware of the following prior art.

Japanese Laid-Open Patent Application No.5-289855

Japanese Laid-Open Patent Application No.2000-347947

Japanese Laid-Open Patent Application No.5-173864

### DISCLOSURE OF THE INVENTION

Accordingly, it is a general object of the present invention to provide a novel and useful software structure restoring method and apparatus, computer program and computer-readable storage medium, in which the problems described above are suppressed.

Another and more specific object of the present invention is to provide a software structure restoring method and apparatus, computer program and computer-readable storage medium, which can easily restore a software environment to a customized software environment by a simple operation, when reinstalling an operating system (OS) of an information processing apparatus that has the software environment customized by a user.

Still another object of the present invention is to provide a software structure restoration method comprising a storing step storing software structure information for identifying a software and install information required to install the software in a memory region, when installing the software to an information processing apparatus; and an install step reinstalling the software to the information processing apparatus based on the software structure information and the install information by accessing the memory region, when reinstalling an operating system to the information processing apparatus. According to the software structure restoration method of the present invention, it is possible to easily restore the software environment to a customized software environment by a simple operation, when reinstalling the operating system of the information processing apparatus that has the software environment customized by a user .

A further object of the present invention is to provide a software structure restoration apparatus comprising means for storing information related to a software environment, including software structure information for identifying a software and install information required to install the software in a memory region, when installing the software to an information processing apparatus; and means for reinstalling the software to the information processing apparatus based on the information related to the software environment by accessing the memory region, when reinstalling an operating system to the information processing apparatus. According to the software structure restoration apparatus of the present invention, it is possible to easily restore the software environment to a customized software environment by a simple operation, when reinstalling the operating system of the information processing apparatus that has the software environment customized by a user.

Another object of the present invention is to provide a computer-readable storage medium which stores a computer program for causing a computer to restore a software environment, said computer program comprising a storing procedure causing the computer to store software structure information for identifying a software and install information required to install the software in a memory region, when installing the software to the computer; and an install procedure causing the computer to reinstall the software to the computer based on the software structure information and the install information by accessing the memory region, when reinstalling an operating system to the computer. According to the computer-readable storage medium of the present invention, it is possible to easily restore the software environment to a customized software environment by a simple operation, when reinstalling the operating system of the computer that has the software environment customized by a user.

Still another object of the present invention is to provide a computer program for causing a computer to restore a software environment, comprising a storing procedure causing the computer to store software structure information for identifying a software and install information required to install the software in a memory region, when installing the software to the computer; and an install procedure causing the computer to reinstall the software to the computer based on the software structure information and the install information by accessing the memory region, when reinstalling an operating system to the computer. According to the computer program of the present invention, it is possible to easily restore the software environment to a customized software environment by a simple operation, when reinstalling the operating system of the computer that has the software environment customized by a user.

Other objects and further features of the present invention will be apparent from the following detailed description when read in conjunction with the accompanying drawings.

### BRIEF DESCRIPTION OF THE DRAWINGS

FIG. 1 is a perspective view showing a personal computer;
FIG. 2 is a system block diagram showing a structure of an important part of the personal computer;
FIG. 3 is a diagram for explaining an operation when installing a software;
FIG. 4 is a diagram for explaining a data structure of install information;
FIG. 5 is a diagram for explaining a data structure of software structure information;
FIG. 6 is a diagram for explaining an operation when restoring software;
FIG. 7 is a diagram showing a state of a storage region on hard disks at the time of forwarding;
FIG. 8 is a diagram showing a state of the storage region on the hard disks at the time of use by a user;
FIG. 9 is a diagram showing a state of the storage region on the hard disks when reinstalling an operating system;
FIG. 10 is a flow chart for explaining an operation of an embodiment;
FIG. 11 is a flow chart for explaining the operation of the embodiment;
FIG. 12 is a flow chart for explaining the operation of the embodiment;
FIG. 13 is a flow chart for explaining the operation of the embodiment;
FIG. 14 is a flow chart for explaining the operation of the embodiment;
FIG. 15 is a diagram showing a display screen at an important part of the embodiment;
FIG. 16 is a diagram showing a display screen at an important part of the embodiment;
FIG. 17 is a diagram showing a display screen at an important part of the embodiment;
FIG. 18 is a diagram showing a display screen at an important part of the embodiment;
FIG. 19 is a diagram showing a display screen at an important part of the embodiment;
FIG. 20 is a diagram showing a display screen at an important part of the embodiment;
FIG. 21 is a diagram showing a display screen at an important part of the embodiment;
FIG. 22 is a diagram showing a display screen at an important part of the embodiment;
FIG. 23 is a diagram showing a display screen at an important part of the embodiment;
FIG. 24 is a diagram showing a display screen at an important part of the embodiment;
FIG. 25 is a diagram showing a display screen at an important part of the embodiment; and
FIG. 26 is a diagram showing a display screen at an important part of the embodiment.

### BEST MODE OF CARRYING OUT THE INVENTION

A description will be given of embodiments of a software structure restoring method and apparatus and a computer-readable storage medium according to the present invention, by referring to the drawings. In the following description, it is assumed for the same of convenience that the present invention is applied to a personal computer which is one example of an information processing apparatus. Accordingly, an embodiment of the software structure restoring method is carried out by the personal computer, and an embodiment of the software structure restoring apparatus is formed by the personal computer. In addition, an embodiment of the computer-readable storage medium is formed by a recording medium which stores a computer program for causing the personal computer to restore the software structure by this embodiment of the software structure restoring method. The recording medium is not limited to a particular kind, and any recording media capable storing the computer program in a computer-readable manner, such as magnetic recording media, optical recording media, magneto-optical recording media and semiconductor memory devices, may be used.

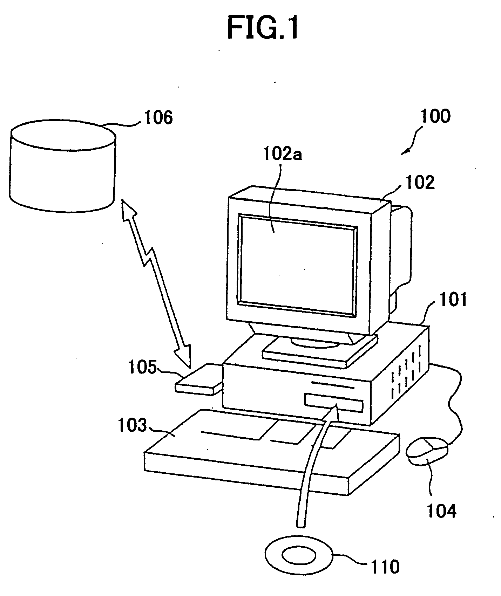

FIG. 1 is a perspective view showing the personal computer. A personal computer 100 shown in FIG. 1 includes a main body part 101 that has a CPU, a disk drive and the like, a display that displays an image on a display screen 102a in response to an instruction from the main body part 101, a keyboard 102 for inputting various information to the personal computer 100, a mouse 104 for specifying an arbitrary position on the display screen 102a of the display 102, and a modem 105 for accessing an external database or the like and downloading a computer program or the like that is stored in another computer. A computer program which is stored in a portable recording medium such as a CD 110 or, downloaded from a recording medium 106 of another computer via a network such as the Internet using a communication apparatus such as the modem 105, is input to and executed by the personal computer 100.

The computer program includes software such as an operating system (OS) and application programs. The application programs may include a preinstalled application program, and the user may uninstall an arbitrary application program that is preinstalled or, install a new application program.

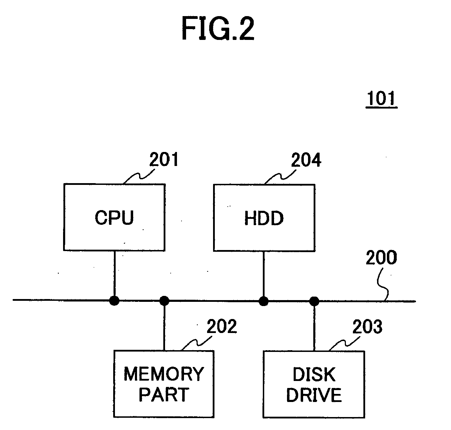

FIG. 2 is a system block diagram showing a structure of an important part of the personal computer 100. The main body part 101 includes a CPU 201, a memory part 202 that includes a RAM, a ROM, a flash memory or the like, a disk drive 203 for the CD 110, and one or a plurality of hard disk drives (HDDs) 204 that are connected via a bus 200. For the sake of convenience, the display 102, the keyboard 103 and the mouse 104 are connected to the bus 200 in the structure shown, but such elements may of course be connected directly to the CPU 201. In addition, when using a magnetic disk or a magneto-optical disk in place of the CD 110, the disk drive 203 may be changed to a magnetic disk drive or a magneto-optical disk drive.

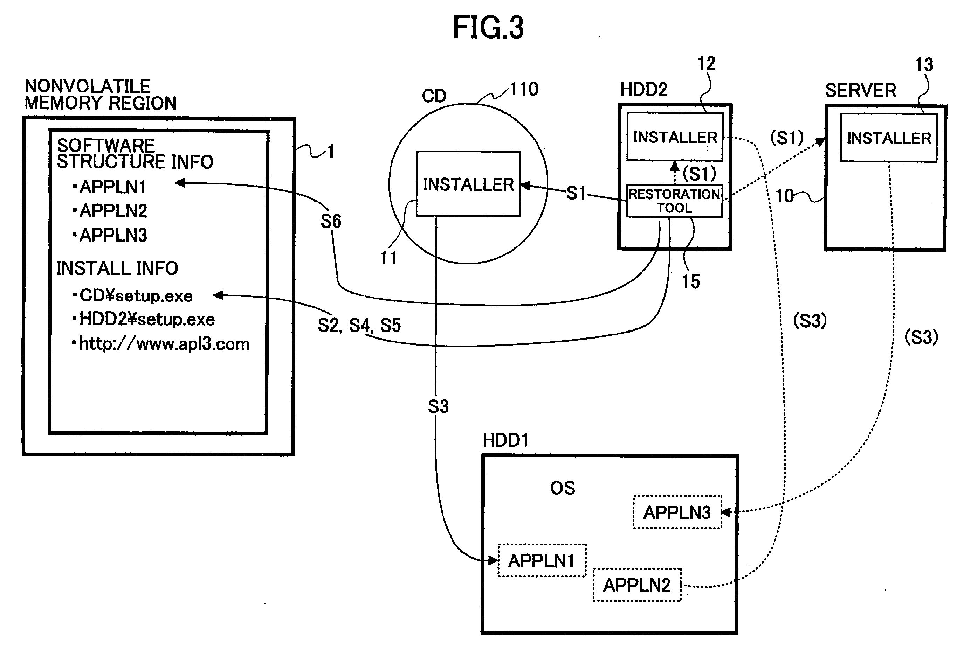

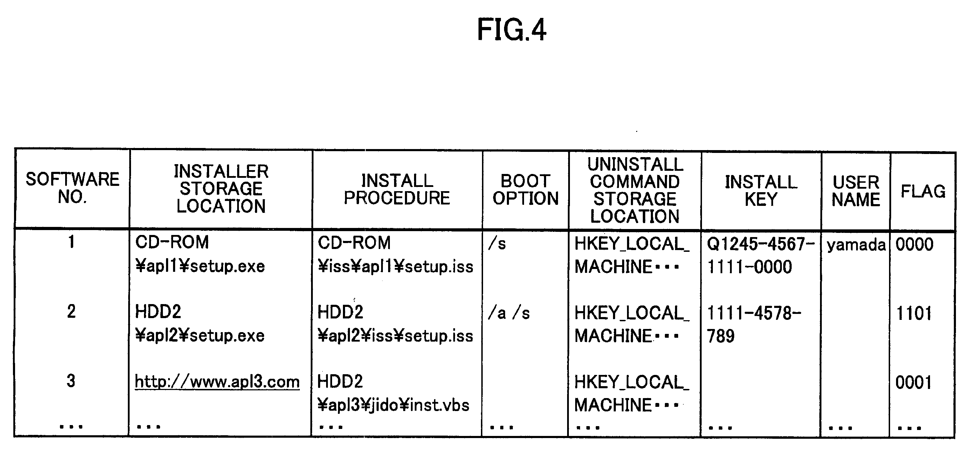

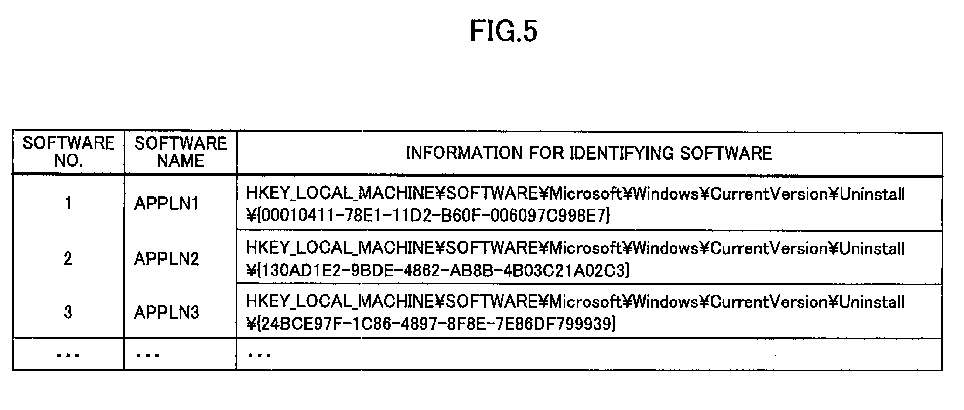

First, a description will be given of an operation of this embodiment when installing the software, by referring to FIGS. 3 through 5. FIG. 3 is a diagram for explaining the operation when installing the software. In addition, FIG. 4 is a diagram for explaining a data structure of install information, and FIG. 5 is a diagram for explaining a data structure of software structure information.

In FIG. 3, a nonvolatile memory region 1 is provided within the memory part 202 and/or on the hard disks within the HDD 204, and stores the software structure information and the install information which will be described later. For example, in a case where a BIOS is stored in the flash memory forming the memory part 202, the nonvolatile memory region 1 may be provided within this flash memory. The CD 110 stores an installer (installer module) 11 that is used when installing to the personal computer 100 an application program APPLN1 that is stored in the CD 110. Storage regions HDD1 and HDD2 are provided on the hard disks within the HDD 204. FIG. 3 shows a case where 2 HDDs 204 are provided and each of the storage regions HDD1 and HDD2 corresponds to one HDD 204. In this embodiment, it is assumed for the sake of convenience that an operating system OS and application programs APPLN1, APPLN2 and APPLN3 are stored in the storage region HDD1. A restoration tool 15 and an installer 12 that is used when installing the application program APPLN2 stored in the storage region HDD1 to the personal computer 100, are stored in the storage region HDD2. A server 10 is connectable to the personal computer 100 via a network such as the Internet, and is provided with an installer 13 that is used when downloading the application APPLN3 to the personal computer 100 via the network. The storage regions HDD1 and HDD2 may be provided on the same hard disk or, provided on mutually different hard disks.

It is assumed that an uninstaller is installed together with the application program when installing the application program. Accordingly, in the case shown in FIG. 3, the uninstallers are stored in the storage region HDD1 when installing the application programs APPLN1, APPLN2 and APPLN3.

The install information shown in FIG. 4 is necessary to install the application program (software), and includes a software number, an installer storage location, an install procedure, a boot option, an uninstall command storage location, an install key, a user name, a flag, and the like. The software number indicates an identification number that is assigned to each application program (software) for the sake of convenience. The installer storage location indicates a storage location of the installer that is used when installing the corresponding application program. The install procedure indicates an install procedure of the corresponding application program. The boot option indicates a command line option at the time of booting the installer of the corresponding application program. The uninstall command storage location indicates a storage location of the uninstall command that instructs the uninstalling of the corresponding application program. The install key indicates a CD key that is input when installing the corresponding application program, a registration number that is assigned at the time of purchase when purchasing and downloading the corresponding application program from the Web, or the like. The user name indicates a user name that is input when installing the corresponding application program. The flag indicates whether the corresponding application program is preinstalled, uninstalled by the user, installed by the user or the like.

The software structure information shown in FIG. 5 identifies the application program (software), and includes a software number, a software name, information for identifying the software, and the like. The software number is the same as the software number of the install information shown in FIG. 4. The software name indicates a name that is assigned to each application program. The information for identifying the software is used to identify the corresponding application program. In this embodiment, a registry key that is created at the time of the installing is used as the information for identifying the software.

The following steps S1 through S6 are carried out at the time of the software installing. The software installing is carried out at an arbitrary time by the user, for example.

Step S1: When a software install instruction is received, a corresponding installer is booted from the restoration tool 15, in response to the specified application program that is to be installed in the personal computer 100. For example, when the application program APPLN1 is specified, the corresponding installer 11 is booted.

Step S2: The storage location of the booted installer is stored in the install information of the nonvolatile memory region 1.

Step S3: The specified application program is installed by the booted installer.

Step S4: The install procedure of the application program that is installed in the step S3 is output in scrips or the like and recorder.

Step S5: The install procedure recorded in the step S4 is stored in the install information of the nonvolatile memory region 1.

Step S6: The information (for example, registry key) for identifying the application program that is installed in the step S3 is stored in the software structure information of the nonvolatile memory region 1.

Step S7: If there are other specified application programs that are to be installed in the personal computer 100, the process returns to the step S1, but the process ends if no other application program to be installed is specified.

Next, a description will be given of an operation of this embodiment when uninstalling the software. The following steps S11 through S14 are carried out at the time of software uninstalling. The software uninstalling is carried out at an arbitrary time by the user, for example.

Step S11: When a software uninstall instruction is received, a corresponding installer is booted from the restoration tool 15, in response to the specified application program that is to be uninstalled in the personal computer 100. For example, when the application program APPLN1 is specified, the corresponding installer 11 is booted.

Step S12: The specified application program is uninstalled by the booted installer.

Step S13: With respect to the application program that is uninstalled in the step S12, the information (software structure information and install information) related to the uninstalled application program is deleted from the software structure information and the install information stored in the nonvolatile memory region 1. In addition, in the case where the uninstalled application program was a preinstalled application program, the information related to the uninstalled application is not deleted, and information indicating that this application program has been uninstalled is stored in a corresponding flag of the install information.

Step S14: If there are other specified application programs that are to be uninstalled from the personal computer 100, the process returns to the step S11, but the process ends if no other application program to be uninstalled is specified.

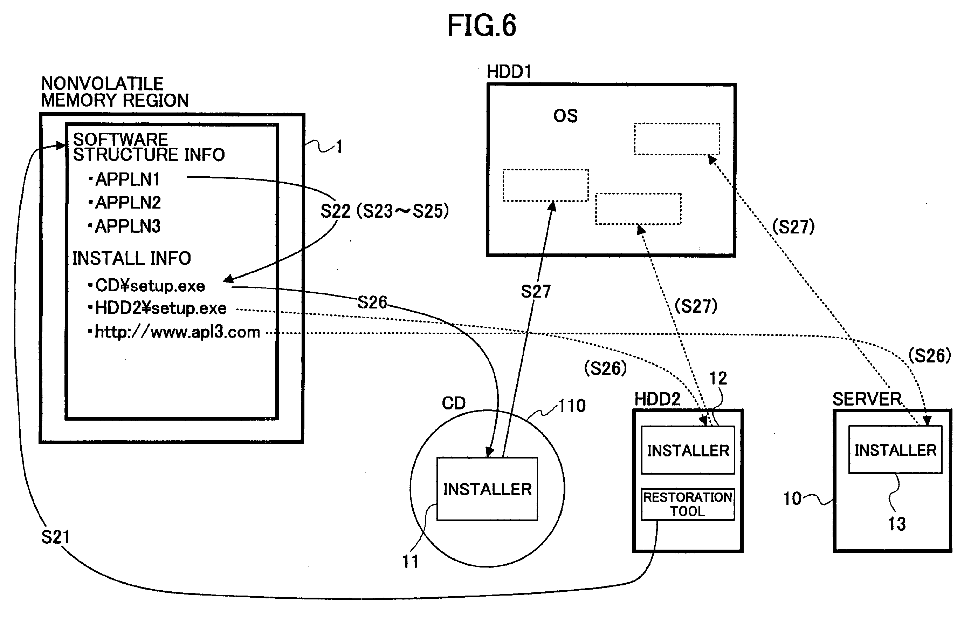

Next, a description will be given of an operation of this embodiment when restoring the software. FIG. 6 is a diagram for explaining the operation when restoring the software. In FIG. 6, those parts which are the same as those corresponding parts in FIG. 3 are designated by the same reference numerals, and a description thereof will be omitted.

The following steps S21 through S26 are carried out at the time of software restoration. The software restoration is carried out when a trouble is generated in the personal computer 100 and it becomes necessary for the user to reinstall the operating system OS, for example.

Step S21: When a reinstall instruction to reinstall the operating system OS is received, the operating system OS is reinstalled with respect to the personal computer 100 by a known method.

Step S22: A reference is made to the software structure information stored in the nonvolatile memory region 1 by booting the restoration tool 15 that is stored in the storage region HDD2, so as to acquire the install application of each application program.

Step S23: Based on the install information that is acquired in the step S22, a list of the application programs usable in the original software environment, that is, usable in the customized software environment before the reinstalling of the operating system OS became necessary, is displayed on the display screen 102a of the display 102.

Step S24: The user is urged to specify the application program that is to be reinstalled, from the list of the application programs displayed on the display screen 102a of the display 102, by displaying a message or the like. For example, the user may specify the application program to be reinstalled, one by one or, the user may specify only the application program that does not need to be reinstalled from the screen which is preset to specify all of the application programs, using the mouse 104 or the like.

Step S25: When the specifying of the application programs to be reinstalled becomes definite, the user is urged to input a reinstall start instruction by displaying a message or the like.

Step S26: When the reinstall start instruction is input in the step S25, the corresponding installer is booted based on the install information related to the application program to be reinstalled.

Step S27: The corresponding application program is reinstalled in the storage region HDD1 by the booted installer. The reinstalling may be carried out automatically without troubling the user if the install procedure (script or the like) and the install key are stored in the install information.

Step S28: If there are other specified application programs that are to be reinstalled to the personal computer 100, the process returns to the step S26, but the process ends if no other application program to be reinstalled is specified.

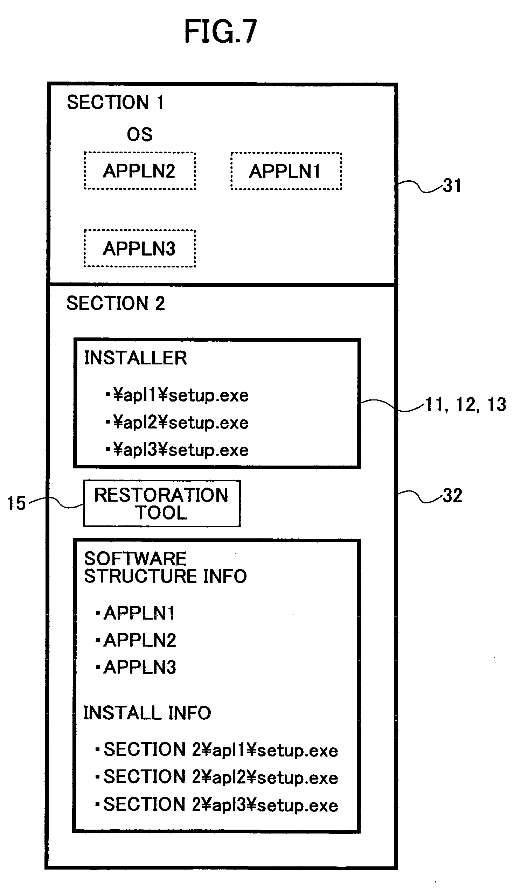

Next, a description will be given of an operation when a manufacturer or the like preinstalls the application program when forwarding the personal computer 100, by referring to FIG. 7.

FIG. 7 is a diagram showing a state of a storage region on the hard disk of the HDD 204 at the time of forwarding. At the time of forwarding, the operating system OS is installed in a first storage region 31, and the application programs APPLN1, APPLN2 and APPLN3, for example, are preinstalled in the first storage region 31 in which the operating system OS is installed. In addition, the installers (install modules) 11, 12 and 13 of the application programs APPLN1, APPLN2 and APPLN3 are stored in a second storage region 32 which is different from the storage region 31 in which the operating system OS is installed. The software structure information and the install information related to the preinstalled application programs APPLN1, APPLN2 and APPLN3 are stored in the second storage region 32 which is different from the storage region 31 in which the operating system OS is installed. Further, the restoration tool 15 is stored in the second storage region 32, for example, which is different from the storage region 31 in which the operating system OS is installed.

FIG. 7 shows a case where one HDD 204 is provided at the time of forwarding, and the storage region of the hard disks within the HDD 204 is sectioned into two sections, so that the first storage region 31 is provided in the first section and the second storage region 32 is provided in the second section. At the time of forwarding, it is possible to store the installers (install modules) 11, 12 and 13 of the application programs APPLN1, APPLN2 and APPLN3 and the restoration tool 15 in the second storage region 32 which is different from the storage region 31 in which the operating system OS is installed, and to store the software structure information and the install information related to the application programs APPLN1, APPLN2 and APPLN3 in the nonvolatile memory region 1 (flash memory or the like of the BIOS).

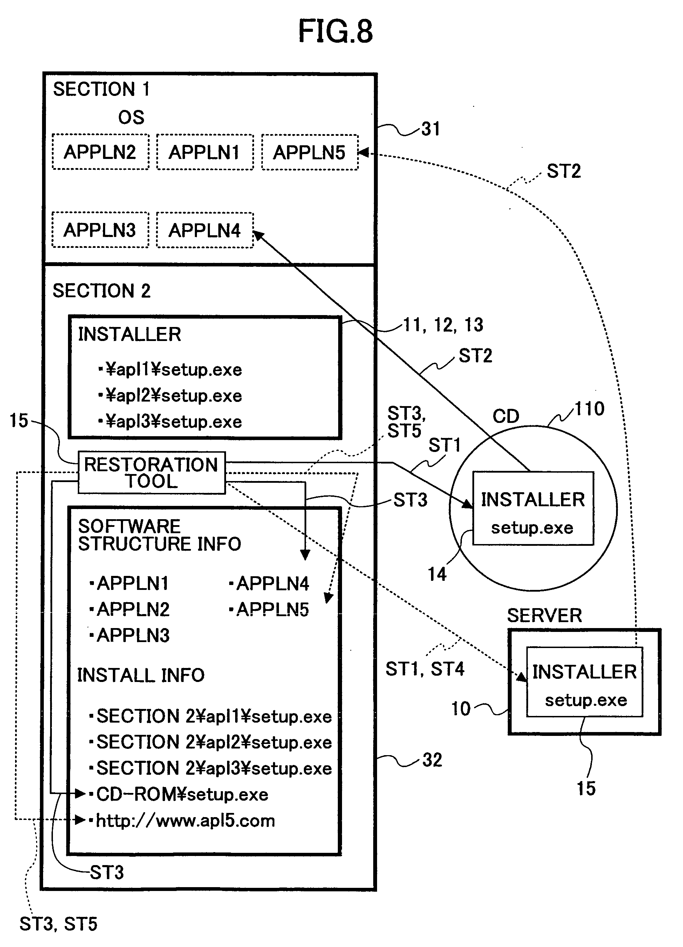

Next, a description will be given of an operation when installing and/or uninstalling the application program when the user uses the personal computer 100, by referring to FIG. 8. For the sake of convenience, it is assumed that the state of the storage region on the hard disks of the HDD 204 at the time of forwarding is as shown in FIG. 7.

FIG. 8 is a diagram showing the state of the storage region on the hard disks of the HDD 204 at the time of use by the user. In FIG. 8, those parts which are the same as those corresponding parts in FIG. 7 are designated by the same reference numerals, and a description thereof will be omitted.

At the time of installing, installers 14 and 15 of application programs APPLN4 and APPLN5 that are to be installed are booted from the restoration tool 15 (step ST1). It is assumed in this case that the installer 14 is stored in the CD 110, and the installer 15 stored in the server 10. The application programs APPLN4 and APPLN5 are stored in the first storage region 31 by the corresponding installers 14 and 15 (step ST2). In addition, the software structure information and the install information of the application programs APPLN4 and APPLN5 that are installed is stored in the second storage region 32 (step ST3).

For example, at the time of uninstalling carried out thereafter, the uninstaller for the application program APPLN5 that is to be uninstalled is booted from the restoration tool 15, and the application program APPLN5 is deleted from the first storage region 31 (step ST4) . In addition, information indicating that the application program APPLN5 has been uninstalled is stored in the flag of the install information of the application program APPLN5. If the user desires, the software structure information and the install information of the application program APPLN5 that is uninstalled may be deleted from the second storage region 32 (step ST5) .

When uninstalling the application program APPLN1 that is preinstalled, the application program APPLN1 is deleted from the first storage region 31, but the software structure information and the install information of the application program APPLN1 that is uninstalled is not deleted from the second storage region 32, and information indicating that the application program APPLN1 has been uninstalled is stored in the flag of the install information of the application program APPLN1.

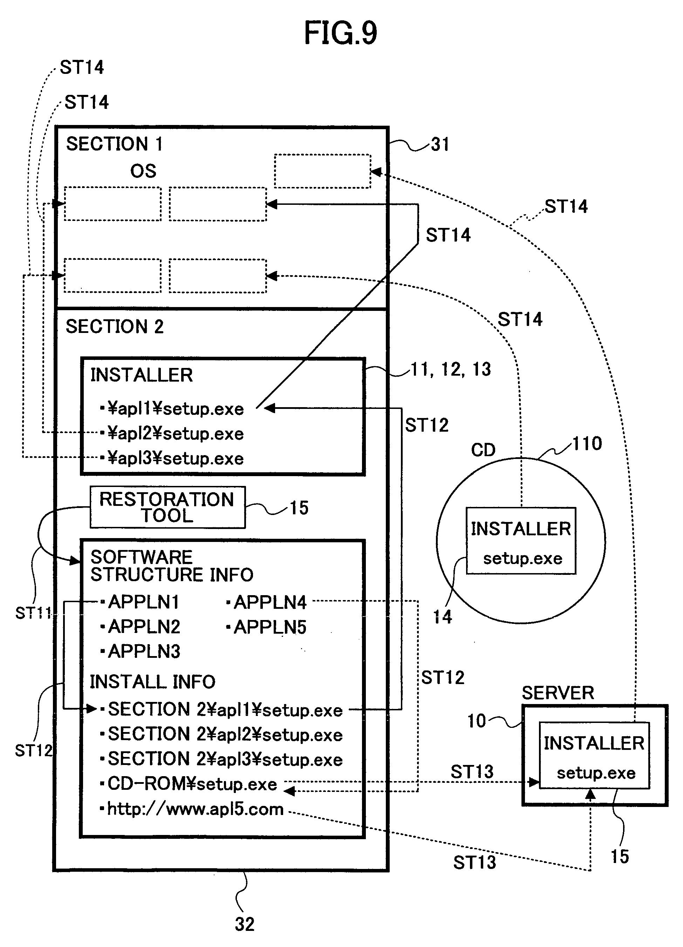

Next, a description will be given of an operation when the user reinstalls the operating system OS to the personal computer 100, by referring to FIG. 9. For the sake of convenience, it is assumed that the software environment is returned to the software environment such that the state of the storage region on the hard disks of the HDD 204 is as shown in FIG. 8. In other words, it is assumed that the software environment is returned to the software environment in which the application programs APPLN4 and APPLN5 have been installed by the user in addition to the application programs APPLN1, APPLN2 and APPLN3 that are preinstalled.

FIG. 9 is a diagram showing a state of the storage region on the hard disks when reinstalling the operating system OS. In FIG. 9, those parts which are the same as those corresponding parts in FIG. 8 are designated by the same reference numerals, and a description thereof will be omitted.

The operating system OS is reinstalled by a known method and stored in the first storage region 31. Thereafter, the restoration tool 15 is booted, and a reference is made to the software structure information and the install information related to the application program which is to be installed and is specified by the user, by making access to the second storage region 32 (step ST11). In this case, a reference is made to the software structure information and the install information related to all of the application programs APPLN1 through APPLN5 (step ST12). Thereafter, the installers 11 through 15 corresponding to the application programs APPLN1 through APPLN5 are successively booted based on the install information (step ST13), and the application programs APPLN1 through APPLN5 are installed (step ST14) and stored in the first storage region 31, so as to return the software environment to the software environment originally used by the user.

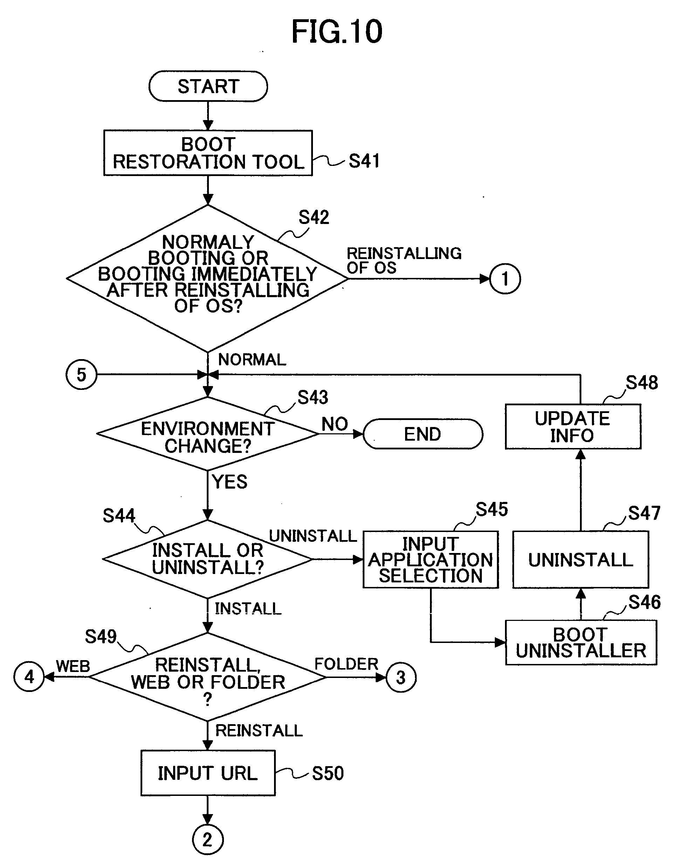

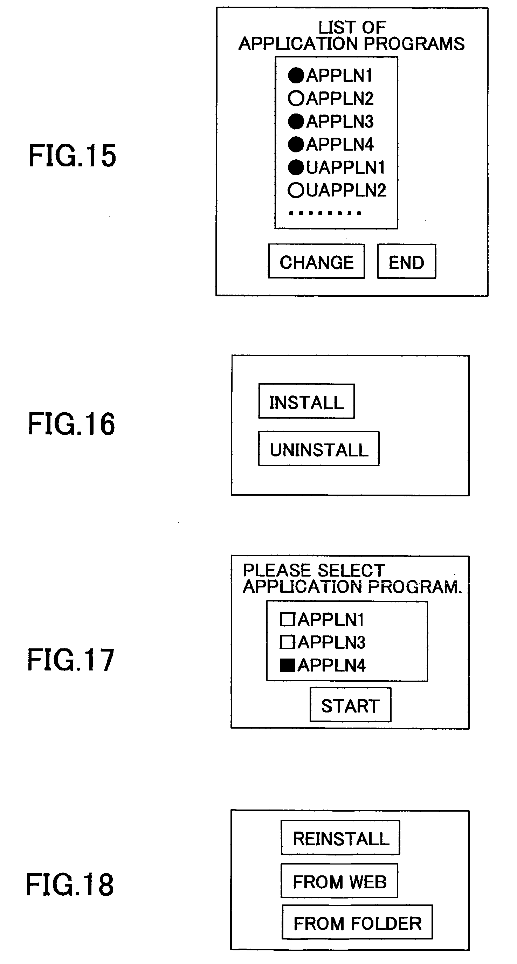

Next, a description will be given of the operation of this embodiment, by referring to screens displayed on the display screen 102a of the display 102, in conjunction with FIGS. 10 through 26. FIGS. 10 through 14 are flow charts for explaining the operation of this embodiment. In addition, FIGS. 15 through 26 are diagrams showing display screens at important parts of the operation shown in FIGS. 10 through 14. FIGS. 15 through 26 respectively show important parts of the display screens, and do not necessarily show the entire display screen.

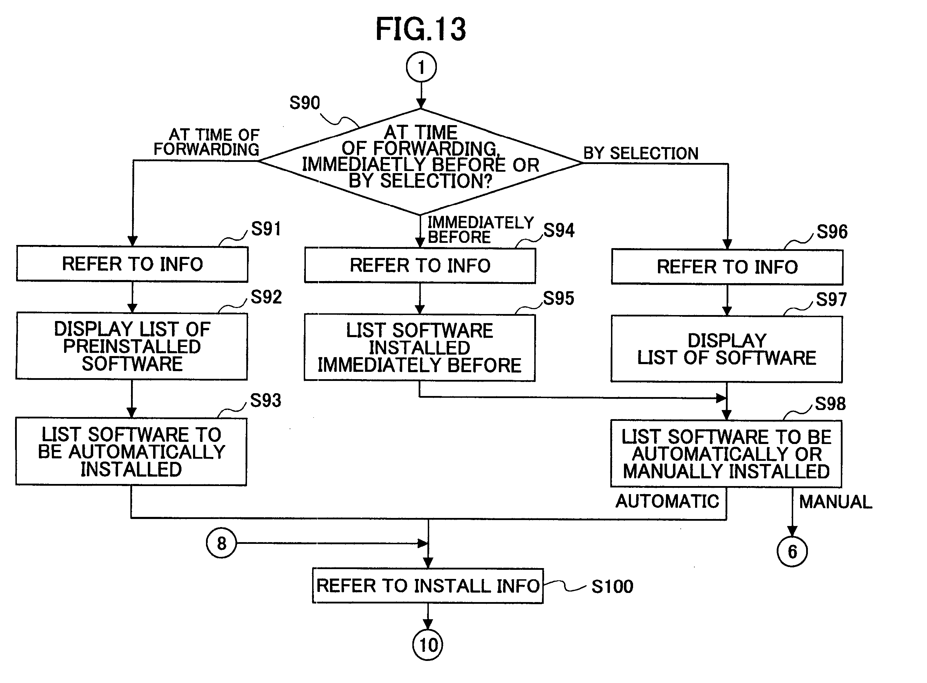

The process shown in FIG. 10 is started when the power of the personal computer 100 is turned ON. A step S41 boots the restoration tool 15, and a step S42 decides whether the booting is a normal boot or a boot immediately after reinstalling of the operating system OS. If the booting is the boot immediately after reinstalling of the operating system OS, the process advances to a step S90 which will be described later in conjunction with FIG. 13. On the other hand, if the booting is the normal boot, a step S43 displays a display screen shown in FIG. 15 including a list of application programs on the display 102, by referring to the software structure information, and decides whether or not to change the software environment. In FIG. 15, a symbol "•" indicates an application program that has been installed, and a symbol "o" indicates an application program which has been uninstalled. If an "end" button is selected by the mouse 104 or the like on the display screen shown in FIG. 15, no change is made to the software environment, and the process ends. On the other hand, if a "change" button is selected on the display screen shown in FIG. 15, the process advances to a step S44 to make a change in the software environment.

In FIG. 15 and FIGS. 25 and 26 which will be described later, application programs APPLN1, APPLN2, ... indicate preinstalled programs, for example, and application programs UAPPLN1, UAPPLN2, ... indicate programs that were installed by the user, for example.

The step S44 displays a display screen shown in FIG. 16 for software structure change, and decides whether installing of the application program has been selected or uninstalling of the application program has been selected. If an "uninstall" button is selected on the display screen shown in FIG. 16, the process advances to a step S45 to carry out the uninstalling. The step S45 displays a display screen shown in FIG. 17 for selecting the uninstalling application program, by referring to the software structure information and the install information, and a selection of the application program that is to be uninstalled is input. In the display screen shown in FIG. 17, a symbol "□" indicates an installed application program, and a symbol "■" indicates a selected application program that is to be uninstalled. In the particular case shown in FIG. 17, the selected application program that is to be uninstalled is the application program APPLN4. When the application program that is to be uninstalled is selected and an "end" button is selected on the display screen shown in FIG. 17, a step S46 refers to the install information of the selected application program and boots the corresponding uninstaller. A step S47 uninstalls the application program that is selected by the uninstaller that is booted. A step S48 updates the software structure information and the install information related to the uninstalled application program, and the process returns to the step S43. If the uninstalled application program was not preinstalled, the software structure information and the install information related to the uninstalled application program is deleted.

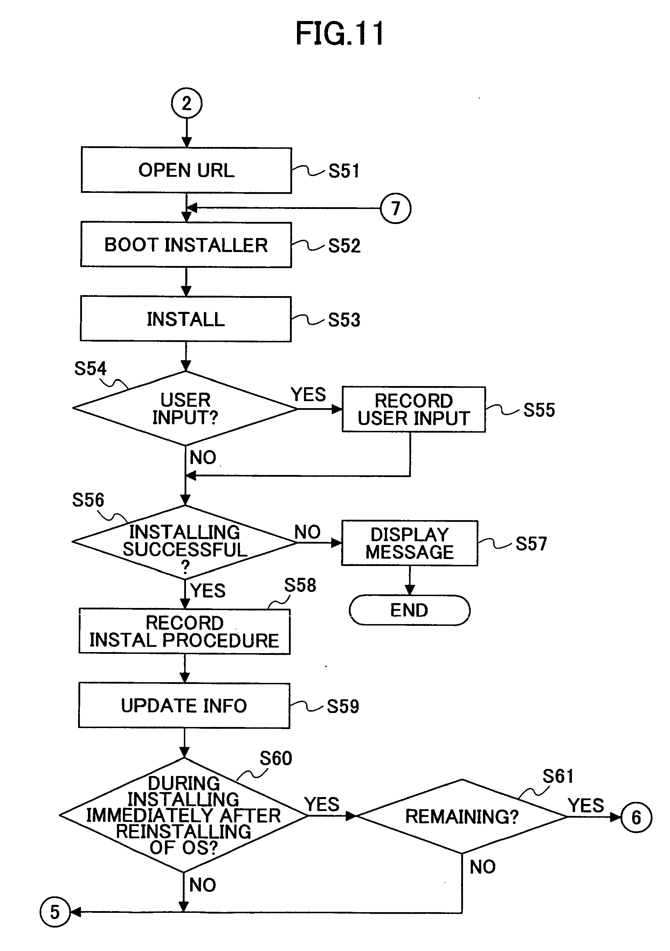

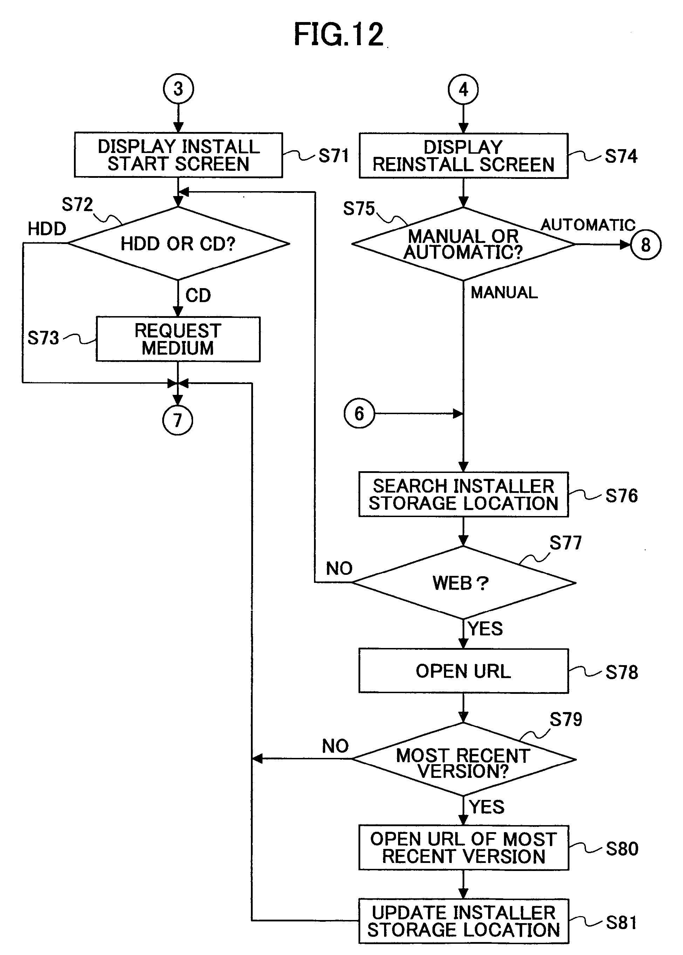

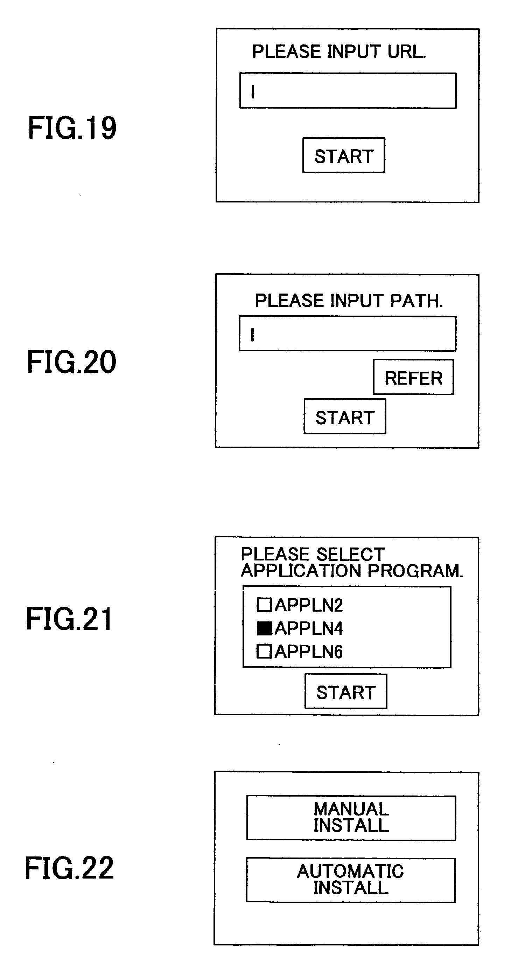

On the other hand, if an "install" button is selected on the display screen shown in FIG. 16, the process advances to a step S49 to carry out the installing. The step S49 displays a display screen shown in FIG. 18 for selecting an install source, and decides whether a reinstalling of an uninstalled application program or, an installing of an application program from the Web or, an installing of an application program from a folder is selected. If a "from folder" button is selected on the display screen shown in FIG. 18, the process advances to a step S71 shown in FIG. 12 which will be described later. If a "from Web" button is selected on the display screen shown in FIG. 18, the process advances to a step S74 shown in FIG. 12 which will be described later. If a "reinstall" button is selected on the display screen shown in FIG. 18, the process advances to a step S50. The step S50 displays a display screen shown in FIG. 19 for starting the installing from the Web, and the process advances to a step S51 shown in FIG. 11 if a URL is input and a "start" button is selected on this display screen.

In FIG. 11, the step S51 opens the URL that is input, using a known browser function, and a step S52 boots the installer of the application program that is to be installed. A step S53 installs the application program according to the installer that is booted. A step S54 decides whether or not a user input, such as the install key and the user name, exists. If the decision result in the step S54 is YES, a step S55 records the user input as the install information. If the decision result in the step S54 is NO or, after the step S55, a step S56 decides whether or not the installing of the application program was successful. If the decision result in the step S56 is NO, a step S57 displays a message indicating that the installing has failed, and the process ends.

On the other hand, if the decision result in the step S56 is YES, a step S58 outputs the install procedure in script or the like, and records the install procedure as the install information. A step S59 updates the software structure information and the install information. The install information that is updated includes an installer storage location corresponding to the application program that is installed, the install procedure and the user input (install key and user name) that are recorded as described above, the flag and the like. A step S60 decides whether or not it is during the installing of the application program immediately after reinstalling of the operating system OS, and the process returns to the step S43 shown in FIG. 10 if the decision result in the step S60 is NO. If the decision result in the step S60 is YES, a step S61 decides whether or not there is a remaining application program that is to be installed, and the process returns to the step S43 shown in FIG. 10 if the decision result in the step S61 is NO. If the decision result in the step S61 is YES, the process advances to a step S76 shown in FIG. 12.

In FIG. 12, the step S71 displays a display screen shown in FIG. 20 for starting the installing from the folder. If a "refer" button is selected on the display screen shown in FIG. 20, a file selection dialog of the Windows (registered trademark) standard, for example, is displayed to enable a path selection. When the path is selected and a "start" button is selected, a step S72 decides whether the installer storage location corresponding to the application program that is to be installed is the HDD 204 or a removable recording medium such as the CD 110. If the installer storage location is the removable recording medium, a step S73 displays a message requesting the removable recording medium, and the process returns to the step S52 shown in FIG. 11 if the removable recording medium is loaded into or connected to the personal computer 100. On the other hand, the process returns to the step S52 shown in FIG. 11 also when the installer storage location is the HDD 204.

A step S74 refers to the software structure information and displays a display screen shown in FIG. 21 for reinstalling. The display screen shown in FIG. 21 displays a list of all application programs that have been installed in the past, regardless of the installer storage location and regardless of whether the application program was preinstalled. Accordingly, the user can start reinstalling the application program that is to be reinstalled, by selecting the application program that is to be reinstalled and selecting a "start" button on the display screen. FIG. 21 shows a state where the application program APPLN4 is selected as the application program that is to be reinstalled.

When the "start" button is selected on the display screen shown in FIG. 21, the step S75 displays a display screen shown in FIG. 22 for selecting the installing method. A "manual install" button for selecting a manual installing, and an "automatic install" button for selecting an automatic installing are displayed on the display screen shown in FIG. 22. The manual installing reinstalls the application program with an install procedure that is different from the previous install procedure, and the install procedure is newly recorded. On the other hand, the automatic installing reinstalls the application program with the same install procedure as the previous install procedure. For example, in a case where the installer exists on the Web and the reinstalling is to be carried out using a most recent version of the installer, the manual installing is selected. The process advances to a step S76 if the "manual install" button is selected in the step S75, and the process advances to a step S100 shown in FIG. 13 which will be described later if the "automatic install" button is selected in the step S75.

The step S76 searches the installer storage location by referring to the install information. A step S77 decides whether or not the installer storage location is on the Web, and the process returns to the step S72 if the decision result in the step S77 is NO. On the other hand, if the decision result in the step S77 is YES, a step S78 opens the URL of the installer storage location that is stored in the install information by use of a known browser function. A step S79 decides whether or not the URL is the most recent version, and the process returns to the step S62 shown in FIG. 11 if the decision result in the step S79 is NO. If the decision result in the step S79 is YES, a step S80 opens the most recent version of the URL. In addition, a step S81 updates the URL of the installer storage location in the install information to the most recent URL, and the process returns to the step S52 shown in FIG. 11.

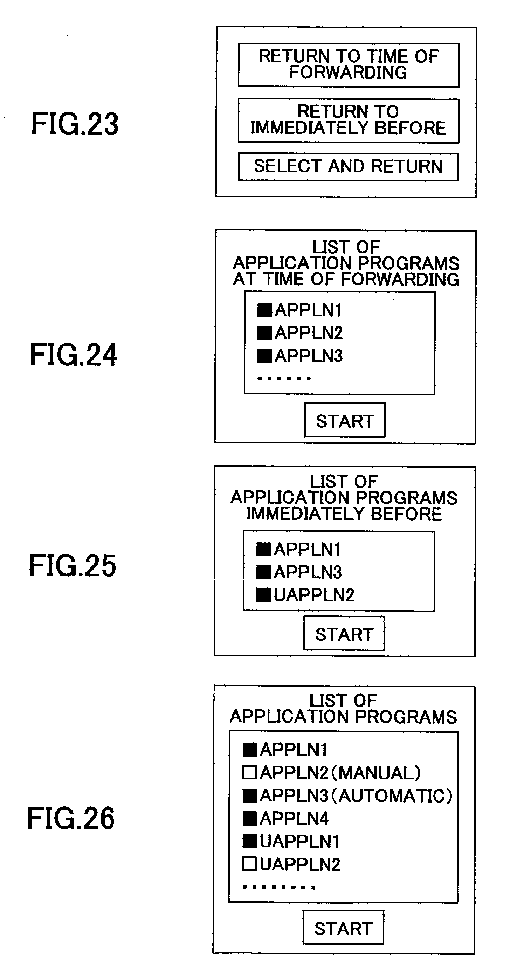

In FIG. 13, the step S90 displays a display screen shown in FIG. 23 for selecting the software structure restoration method. A "return to time of forwarding" button that is selected when returning the software environment to the software environment at the time when the personal computer 100 was forwarded, a "return to immediately before" button that is selected when returning the software environment to the software environment immediately before the operating system OS was reinstalled, and a "select and return" button that is selected when reselecting the application program that is to be installed are displayed on the display screen shown in FIG. 23. The process advances to a step S91 if the "return to time of forwarding" button is selected. The process advances to a step S94 if the "return to immediately before" button is selected. The process advances to a step S96 if the "select and return" button is selected.

The step S91 refers to the software structure and the install information, and a step S92 displays a display screen shown in FIG. 24 including a list of preinstalled software at the time of forwarding based on the software structure and the install information. When the user confirms a preinstalled software, that is, the preinstalled application program on the display screen shown in FIG. 24 and selects a "start" button, the process advances to a step S93 which will be described later.

The step S94 refers to the software structure information and the install information, and a step S95 displays a display screen shown in FIG. 25 including a list of preinstalled software at the time immediately before reinstalling of the operating system OS based on the software structure and the install information. When the user confirms an installed software, that is, the installed application program on the display screen shown in FIG. 25 and selects a "start" button, the process advances to a step S98 which will be described later.

The step S96 refers to the software structure information and the install information, and a step S97 displays a display screen shown in FIG. 26 including a list of software based on the software structure and the install information. All of the preinstalled application programs, including those,which were uninstalled, and all of the application programs that were individually installed by the user, are the display screen shown in FIG. 26, so that the automatic installing and/or the manual installing are selectable with respect to each application program. When the user confirms a software that is to be installed, that is, the application program that is to be installed, and the installing method (automatic or manual installing) on the display screen shown in FIG. 26 and selects a "start" button, the process advances to the step S98. The step S98 extracts and lists the application programs that are to be installed by the automatic installing and the application programs that are to be installed by the manual installing, and the process advances to a step S100 in case of the automatic installing, while the process advances to the step S76 shown in FIG. 12 in the case of the manual installing.

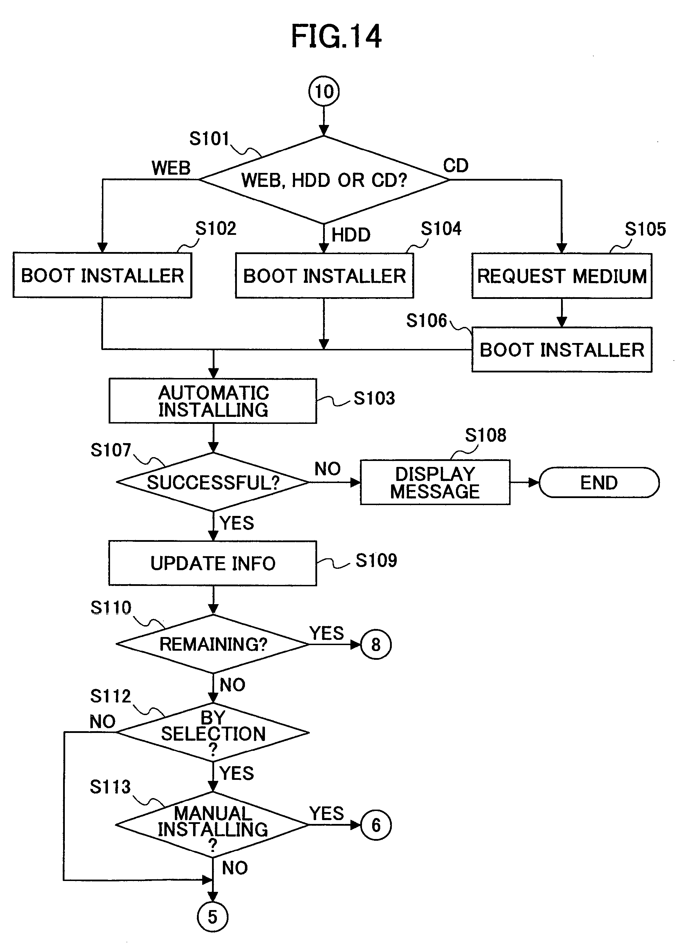

The step S93 extracts and lists the application programs that are to be installed by the automatic installing. The step S100 refers to the install information of the first application program in the list of the application programs that are to be installed by the automatic installing, and the process advances to a step S101 shown in FIG. 14.

In FIG. 14, the step S101 judges the installer storage location corresponding to the selected application program, from the install information. More particularly, the process advances to a step S102 if the installer storage location is on the Web, the process advances to a step S104 if the installer storage location is in the HDD 104, and the process advances to a step S105 if the installer storage location is in the removable recording medium. The step S102 accesses and boots the installer by opening the URL of the installer storage location that is stored in the installer information, and the process advances to a step S103. The step S104 accesses and boots the installer by referring to the folder of the installer storage location that is stored in the install information, and the process advances to the step S103. The step S105 displays a message requesting the removable recording medium, and when the removable recording medium is located into or connected to the personal computer 100, accesses and boots the installer at the installer storage location that is stored in the install information, and the process advances to the step S103.

The step S103 automatically installs by the accessed installer the selected application program according to the install procedure that is stored in the installer information. A step S107 decides whether or not the automatic installing was successful. If the decision result in the step S107 is NO, a step S108 displays a message indicating that the installing failed, and the process ends. On the other hand, if the decision result in the step S107 is YES, a step S109 updates the software structure information and the install information related to the application program that is automatically installed.

A step S110 decides whether or not there remains an application program that is to be automatically installed. If the decision result in the step S110 is YES, the process of the step S100 shown in FIG. 13 is carried out with respect to the next application program that is to be automatically installed. If the decision result in the step S110 is NO, a step S112 decides whether or not the "select and return" button was selected on the display screen shown in FIG. 23 in the step S91 shown in FIG. 13, and the process returns to the step S54 shown in FIG. 10 if the decision result in the step S112 is NO. If the decision result in the step S112 is YES, a step S113 decides whether or not an application program to be manually installed exists. The process returns to the step S43 shown in FIG. 10 if the decision result in the step S113 is NO. On the other hand, if the decision result in the step S113 is YES, a step S114 carries out a process with respect to the first application program in the list of the application programs that are to be manually installed, by returning to the step S76 shown in FIG. 12.

In the embodiment described above, the software structure information and the install information are provided within the memory part 202 (including the nonvolatile memory region) and/or the hard disks within the HDD 204. However, the software structure information and the install information may be provided in the removable recording medium such as the CD 110 or, within a storage unit or a database managed by the server 10 or the like on the Web. All that is required is for the information related to the customized software environment (software structure information and install information) to be stored in a region provided in a storage means that is accessible and will not be lost when reinstalling the operating system OS.

The present invention is applied to the personal computer in the embodiment described above. However, the present invention is of course similarly applicable to any information processing apparatus that is installed with an operating system and one or more application programs and enables reinstalling of the operating system and the application program. In addition, the information processing apparatus is not limited to a desk-top type, and may be a portable type.

Further, the present invention is not limited to these embodiments, but various variations and modifications may be made without departing from the scope of the present invention.

## Claims

1. A software structure restoration method comprising:
a storing step storing software structure information for identifying a software and install information required to install the software in a memory region, when installing the software to an information processing apparatus; and
an install step reinstalling the software to the information processing apparatus based on the software structure information and the install information by accessing the memory region, when reinstalling an operating system to the information processing apparatus.

2. The software structure restoration method as claimed in claim 1, wherein the software includes one or more application programs that are installed in an initial state of the information processing apparatus, and/or one or more application programs that are installed at an arbitrary time.

3. The software structure restoration method as claimed in claim 2, wherein the install information includes a storage location and an install procedure of a corresponding installer, with respect to each software.

4. The software structure restoration method as claimed in claim 3, wherein the install information includes a flag indicating whether or not each preinstalled application program has been uninstalled.

5. The software structure restoration method as claimed in any of claims 2 to 4, further comprising:
a step deleting the corresponding software structure information and the install information, when uninstalling the application program that is installed at the arbitrary time.

6. The software structure restoration method as claimed in any of claims 1 to 5, wherein the memory region is provided in a storage means within the information processing apparatus, a removable recording medium or, a storage means on a Web.

7. The software structure restoration method as claimed in any of claims 1 to 6, wherein the install step displays the software structure information and requests confirmation of the software that is to be reinstalled.

8. The software structure restoration method as claimed in any of claims 1 to 7, wherein the installing, reinstalling and uninstalling of the software are carried out by booting a corresponding installer by a restoration tool that is stored in a storage means within the information processing apparatus.

9. A software structure restoration apparatus comprising:
means for storing information related to a software environment, including software structure information for identifying a software and install information required to install the software in a memory region, when installing the software to an information processing apparatus; and
means for reinstalling the software to the information processing apparatus based on the information related to the software environment by accessing the memory region, when reinstalling an operating system to the information processing apparatus.

10. The software structure restoration apparatus as claimed in claim 9, wherein the software environment information includes a storage location and an install procedure of a corresponding installer, with respect to each software.

11. The software structure restoration apparatus as claimed in claim 9 or 10, further comprising:
storage means including the memory region.

12. A computer-readable storage medium which stores a computer program for causing a computer to restore a software environment, said computer program comprising:
a storing procedure causing the computer to store software structure information for identifying a software and install information required to install the software in a memory region, when installing the software to the computer; and
an install procedure causing the computer to reinstall the software to the computer based on the software structure information and the install information by accessing the memory region, when reinstalling an operating system to the computer.

13. The computer-readable storage medium as claimed in claim 12, wherein the software includes one or more application programs that are installed in an initial state of the computer, and/or one or more application programs that are installed at an arbitrary time.

14. The computer-readable storage medium as claimed in claim 13, wherein the install information includes a storage location and an install procedure of a corresponding installer, with respect to each software.

15. The computer-readable storage medium as claimed in claim 14, wherein the install information includes a flag indicating whether or not each preinstalled application program has been uninstalled.

16. The computer-readable storage medium as claimed in any of claims 13 to 15, wherein the computer program further comprises:
a procedure causing the computer to delete the corresponding software structure information and the install information, when uninstalling the application program that is installed at the arbitrary time.

17. The computer-readable storage medium as claimed in any of claims 12 to 16, wherein the install procedure causes the computer to display the software structure information and to request confirmation of the software that is to be reinstalled.

18. The computer-readable storage medium as claimed in any of claims 12 to 17, wherein the computer program causes the computer to install, reinstall and uninstall the software by booting a corresponding installer by a restoration tool that is stored in a storage means within the computer.

19. A computer program for causing a computer to restore a software environment, comprising:
a storing procedure causing the computer to store software structure information for identifying a software and install information required to install the software in a memory region, when installing the software to the computer; and
an install procedure causing the computer to reinstall the software to the computer based on the software structure information and the install information by accessing the memory region, when reinstalling an operating system to the computer.

20. The computer program as claimed in claim 19, wherein the software includes one or more application programs that are installed in an initial state of the computer, and/or one or more application programs that are installed at an arbitrary time.

21. The computer program as claimed in claim 20, wherein the install information includes a storage location and an install procedure of a corresponding installer, with respect to each software.

22. The computer program as claimed in claim 21, wherein the install information includes a flag indicating whether or not each preinstalled application program has been uninstalled.

23. The computer program as claimed in any of claims 20 to 22, further comprising:
a procedure causing the computer to delete the corresponding software structure information and the install information, when uninstalling the application program that is installed at the arbitrary time.

24. The computer program as claimed in any of claims 19 to 23, wherein the install procedure causes the computer to display the software structure information and requests confirmation of the software that is to be reinstalled.

25. The computer program as claimed in any of claims 19 to 24, which causes the computer to install, reinstall and uninstall the software by booting a corresponding installer by a restoration tool that is stored in a storage means within the computer.
